# EUROPEAN PATENT APPLICATION

(11) **EP 4 534 501 A1**
(43) Date of publication of application: **09.04.2025**
(21) Application number: 24204633.2
(22) Date of filing: 04.10.2024
(51) Int. Cl.: C04B 28/04, C04B 28/14, C04B 38/10

(54) **METHOD FOR PREPARING A MINERAL FOAM AND CELLULAR MATERIAL OBTAINABLE FROM SAID MINERAL FOAM**

(30) Priority: 06.10.2023 IT 202300020721
(71) Applicant: Isoltech S.r.l., 24040 Verdellino (BG) (IT)
(72) Inventor: BELLOTTI, Andrea, 24020 Ranica (BG) (IT)
(74) Representative: Bottero, Carlo

(57) **Abstract**

The present invention relates to a method for preparing a mineral foam comprising the following steps in sequence:
a. preparing a slurry comprising:
(i) a mineral fraction comprising:
- at least one cement-based hydraulic mineral binder;
- at least one reactive mineral addition;
- at least one inorganic aerogel;

(ii) water;
(iii) optionally, at least one additive;

b. adding the slurry with a pre-formed foam to obtain the mineral foam.

The present invention also relates to the cellular mineral material obtained by hardening the above-mentioned foam and to a building construction element comprising the above-mentioned cellular mineral material. The invention also relates to the use of the above-mentioned cellular mineral material as a thermal insulating material, sound absorbing material, or building construction material.

## Description

### Field of the Invention

The present invention relates to a method for preparing a mineral foam and the related cellular mineral material obtainable from said mineral foam.

### Background of the invention

As is known, various typologies of materials are widely used in the construction field to achieve thermal and sound insulation of buildings. The most commonly used insulating materials include molded polystyrene, extruded polystyrene, expanded polyurethane, rock wool, glass wool, and other less common materials, such as cork and wood fiber.

These materials can be introduced in the gap of hollow walls when being made or after making the walls through appropriate systems for insufflating the insulating materials in a fluid state. For walls other than hollow walls, thermal insulation from outside is generally used by the technique referred to as "external thermal insulation system" (ETICS), i.e., by externally coating the walls with prefabricated insulating material plates. When it is not possible or convenient to thermally insulate the building from outside, its thermal insulation can be made by applying the insulating materials to the internal surfaces of the building, thereby obtaining satisfactory results, but with the drawback of proportionally reducing the available internal space.

Each of the above-mentioned materials, though satisfactory in terms of thermal and/or sound insulation performance, has drawbacks of various type. For example, polystyrene is neither fire-resistant nor vapor permeable; furthermore, being a material obtained by petroleum-derived raw materials, it has a high environmental impact and is not recyclable. Polyurethane is also produced from petroleum-derived raw materials and is neither recyclable nor breathable. Rock wool and glass wool, on the other hand, have poor moisture resistance, limited long-term stability, modest consistency, and are non-recyclable. Regarding cork, it has the drawback of having a limited fire resistance and being restrictedly available in nature.

In the state of the art, the use of mineral materials based on Portland cement, lime, and silica, such as autoclaved aerated concrete (e.g., Gasbeton^{®}) and expanded silicate beads, is also known, both as thermal and sound insulating materials and as building materials. These materials have a cellular structure, low density, and relatively high mechanical performance. Due to their chemical composition, they are more environmentally friendly than organic insulating materials and are non-flammable.

Autoclaved aerated concrete is obtained by the reaction at a temperature of about 200°C between lime and silica in an autoclave. The expansion that forms the cellular structure, instead, is obtained through a chemical reaction between aluminium powder and lime. Autoclaved aerated concretes, however, have environmental sustainability issues, mainly related to the use of the autoclave, which, as is known, generates considerable amounts of carbon dioxide (CO₂) that are inputted into the atmosphere and consumes a lot of energy, which is generally produced from fossil fuels.

ITMI20110349A1, in the name of the same Applicant, is also known, which describes a cellular concrete obtained by mixing a cementitious slurry comprising Portland cement, silica sand, and inert fillers with a pre-formed foam. However, this material, not being subjected to vapor treatment in an autoclave, has high shrinkage and moderate mechanical strength.

In patent application EP4092006A1, in the name of the same Applicant, a cellular mineral material is described, obtained by hardening a mineral foam containing Portland cement, a mixture of natural inorganic binders (e.g., metakaolin, hydrated lime, aluminous cement, gypsum), and colloidal silica. This cellular mineral material has good thermal and sound insulation properties, good mechanical performance, lightness, fire resistance, and is recyclable. Although such cellular mineral material can be effectively employed in construction as a building element, thermal and sound insulating element, or fire protection element, preparing it requires to employ a relatively high number of ingredients.

### Summary of the invention

In light of the above-mentioned state of the art, the Applicant has set the primary objective of providing a cellular mineral material as an alternative to those of the prior art.

In particular, a specific object of the present invention is to provide a mineral foam which, once hardened, forms a cellular mineral material having appropriate thermal and sound insulation properties, mechanical performance, lightness, fire resistance, moisture breathability, water repellence, and recyclability.

Another object of the present finding is to provide a mineral foam which, in its wet state, has sufficient consistency and stability to allow it to be poured in cavities or moulds (for example, to produce building construction elements) and to subsequently harden without collapsing the cellular structure.

A further object of the present invention is to provide a method for preparing a mineral foam and the related cellular mineral material that also involves low energy consumption.

The Applicant has now found that the above and other objects, which will be better illustrated in the following description, can be achieved by a mineral foam and the related cellular mineral material obtainable from its hardening, in which the solid mineral phase comprises at least one cement-based hydraulic mineral binder, at least one reactive mineral addition (e.g., metakaolin), and at least one inorganic aerogel (e.g., silica aerogel).

It has been surprisingly observed that the use of an inorganic aerogel in combination with cement-based hydraulic mineral binders (for example, Portland cement) and reactive mineral additions (e.g., metakaolin) allows to obtain a cellular mineral material having excellent thermal and sound insulation properties, due to the high volume of air incorporated in its pores, as well as high fire resistance; furthermore, the cellular mineral material has good mechanical performance and low density.

Although the use of inorganic aerogels to confer thermal insulation properties to concretes is known in the state of the art, its synergy with the cement-based hydraulic mineral binder and the reactive mineral addition is surprising. In particular, the use of a modest amount of inorganic aerogel in the preparation of the mineral foam according to the present invention results in obtaining a cellular mineral material having high mechanical performance (compressive strength) and thermal and sound insulation properties comparable to those of the cellular mineral materials of the state of the art, such as for example EP4092006A1, while using a very simple formulation based on a reduced number of ingredients. Thereby, the process for preparing the cellular mineral materials is simplified and the energy and raw material consumption is reduced.

The reactive mineral additions, i.e., additions with latent hydraulic activity or pozzolanic activity, can be natural materials or recycled materials; therefore, they have a lower environmental impact than cement. In particular, the presence of at least one reactive mineral addition (e.g., metakaolin) in the formulation of the mineral foam in combination with an inorganic aerogel results in the formation of a hardened material having mechanical strength properties comparable to those of products containing only cement.

The hardened cellular mineral material has excellent thermal and sound insulation properties due to the high volume of air incorporated in its pores, as well as good mechanical performance. Furthermore, the inorganic aerogel confers excellent thermal insulation and fire resistance properties to the material, which are particularly surprising considering the low density of the cellular mineral material.

Furthermore, the cellular mineral material has moisture breathability and water repellence properties, i.e., low water absorption (e.g., moisture), and is recyclable at the end of its life, as it can be recovered, for example, as an inorganic filler material in the construction of new building structures or in other production cycles.

The method for preparing the mineral foam involves the separate preparation of a slurry containing water and the solid mineral fraction of the formulation, followed by mixing the slurry with a water-based pre-formed foam; the slurry and the pre-formed foam combined together form the mineral foam. The mineral foam is sufficiently fluid to be poured in a cavity or mould, and its consistency is such that it does not collapse during the subsequent hardening step.

In accordance with a first aspect, therefore, the present invention relates to a method for preparing a mineral foam comprising the following steps in sequence:
a. preparing a slurry comprising:
   (i) a mineral fraction comprising:
      - at least one cement-based hydraulic mineral binder;
      - at least one reactive mineral addition;
      - at least one inorganic aerogel;
   (ii) water;
   (iii) optionally, at least one additive;
b. adding the slurry with a pre-formed foam to obtain the mineral foam.

In accordance with a second aspect, the present invention relates to a mineral foam comprising:
- at least one cement-based hydraulic mineral binder;
- at least one reactive mineral addition;
- at least one inorganic aerogel;
- optionally, at least one additive.

In accordance with a third aspect, the invention relates to a cellular mineral material obtained by hardening the above-mentioned mineral foam.

In accordance with a fourth aspect, the invention relates to a building construction element comprising the above-mentioned cellular mineral material.

In accordance with a fifth aspect, the invention relates to the use of the above-mentioned cellular mineral material as a thermal insulating material, sound absorbing material, or building construction material.

### Detailed Description of the Invention

For the purposes of the present description, the term "mineral foam" means the material in a fluid form obtained by mixing a slurry of water, at least one cement-based hydraulic mineral binder, and at least one reactive mineral addition with a pre-formed foam. The mineral foam is thus a three-phase system consisting of a solid phase, a liquid phase, and a gaseous phase, where the gaseous phase is present in the form of fine gas bubbles uniformly distributed in the mineral foam. After hardening, the mineral foam transitions from a fluid state to a hardened state. The hardened mineral foam, and optionally dried, is also referred to in the present description as "cellular mineral material".

The cement-based hydraulic mineral binder is a finely divided inorganic material which, after mixing with water, forms a paste that sets and hardens through hydration reactions and processes, and after hardening, maintains its strength and stability even under water.

The cement-based hydraulic mineral binder is preferably selected from: Portland cement, aluminous cement, amorphous aluminous cement, sulfo-aluminous cement, and mixtures thereof.

Aluminous and sulfo-aluminous cements, as is known, have a reduced environmental impact compared to Portland cement, as they are produced through calcination at a lower temperature than the calcination of Portland cement clinker. Additionally, these cements provide a greater hardening speed when used in mixture with Portland cement.

Preferably, the hydraulic mineral binder comprises at least Portland cement. In one embodiment, the hydraulic mineral binder consists of Portland cement.

Portland cement can be selected from common cements obtained from Portland cement clinker. In a preferred embodiment, the Portland cement is a cement with normalized strength 52.5 (N).

The reactive mineral addition is a finely divided inorganic substance having latent hydraulic activity or pozzolanic activity according to the definition of "Type II additions" of standard EN 206-1:2006.

Preferably, the reactive mineral addition is selected from: calcined clay, fly ashes, silica fume, natural pozzolan, blast furnace slag, and mixtures thereof.

Preferably, the reactive mineral addition comprises at least one calcined clay, more preferably metakaolin. In one embodiment, the reactive mineral addition consists of a calcined clay, preferably metakaolin. Metakaolin is obtained by calcination of natural clays, for example, at a temperature of about 800°C.

The mineral foam and the cellular material according to the invention include at least one inorganic aerogel.

Generally, an aerogel is a nanostructured, highly porous synthetic solid. The aerogel is obtained from a gel by replacing the liquid part with a gas.

Inorganic aerogels have a low bulk density (typically equal to or lower than 100 kg/m³), a high surface area (typically from 300 to 1,000 m²/g), high porosity (typically equal to or higher than 90%), and a relatively high pore volume (typically equal to or higher than 3 mL/g).

Preferably, the inorganic aerogel comprises or consists of at least one silica aerogel. Aerogels based on oxides of elements other than silicon, such as aluminium, zirconium, and titanium, may also be used for the purposes of the present invention.

The inorganic aerogel can be in powder, granules, or other suitable sizes.

The inorganic aerogel can also be a hydrophobized aerogel, obtained, for example, by treatments with hydrophobising agents (e.g., silanising agents).

Inorganic aerogels can be prepared according to methods known in the art and are commercially available.

In one embodiment, the mineral foam and the cellular material according to the invention comprise at least one non-cementitious hydraulic binder, preferably selected from: hydraulic lime, hydrated lime, gypsum, anhydrite, and mixtures thereof.

The mineral foam and the related cellular mineral material optionally comprise one or more additives. Additives can include, for example: fillers, rheology modifiers, colouring agents, hydrophobising agents, superplasticizers (e.g., lignin sulfonate or melamine sulfonate or naphthalene sulfonate-based compounds, polycarboxylate-based polymeric compounds, and gluconate-based compounds), setting accelerators, setting retarders, surfactants, catalysts, and mixtures thereof.

In one embodiment, the mineral foam and the related cellular mineral material comprise at least one hydrophobising agent to counteract moisture absorption. For example, a hydrophobising agent suitable for the purposes of the invention is a silicon-based powdered compound (e.g., the commercial products SITREN 750 and SITREN 730 by Evonik Nutrition & Care GmbH), calcium stearate (produced, for example, by Faci S.p.A.), or a mixture thereof.

In order to modulate the rheological features of the mineral foam, one or more viscosity agents can be used. Examples of viscosity agents are: products made with wheat starch, tapioca, rice, corn starch, or starch powders such as corn starch, potato starch, and mixtures thereof. Commercially available viscosity agents are for example the products Berolan ST 800, STQX1, ST801, or ST1250 by Berolan GmbH (Austria).

The mineral foam and the related cellular mineral material can also comprise fibers with mechanical reinforcement and/or stabilizing function. The fibers can be made of various materials. Preferably, the fibers are of natural origin, such as basalt fibers and cellulose fibers.

Preferably, the fibers are present in an amount within the range of 0.5 kg/m³ to 5 kg/m³ by weight, more preferably from 1 to 2 kg/m³, with respect to the apparent volume of the mineral foam.

The mineral foam and the related cellular mineral material can also comprise colouring agents to confer a desired colour to the final cellular material, such as metallic oxides, especially iron oxides.

In one embodiment, the mineral foam and the related cellular mineral material do not comprise stone aggregates.

The preparation of the mineral foam involves preparing a slurry comprising water, at least one cement-based hydraulic mineral binder, at least one reactive mineral addition, at least one inorganic aerogel, and optionally the additives.

For this purpose, preferably, the cement-based hydraulic mineral binder, the reactive mineral addition, the inorganic aerogel, and optionally the powdered additives are mixed together to form a powdered mixture before being combined with water to form the slurry.

Preferably, the cement-based hydraulic mineral binder is present in the slurry in an amount within the range of 30 to 95 wt%, more preferably from 40 to 90 wt%, with respect to the total weight of the reactive mineral addition and inorganic aerogel.

Preferably, the reactive mineral addition is present in the slurry in an amount within the range of 90 to 99.5 wt%, more preferably from 95 to 99.3 wt% (for example, 97 - 99 wt%), with respect to the total weight of the reactive mineral addition and inorganic aerogel.

Preferably, the inorganic aerogel is present in the slurry in an amount within the range of 0.5 to 10 wt%, more preferably from 0.7 to 5 wt% (e.g., 1.0 - 3.0 wt%), with respect to the total weight of the reactive mineral addition and inorganic aerogel.

In a preferred embodiment, the slurry comprises:
a. 100 parts by weight of a mineral mixture comprising:
   - 95 - 99.3 wt% of at least one reactive mineral addition,
   - 0.7 - 5 wt% of inorganic aerogel, said percentages being referred to the total weight of the mineral mixture (i.e., reactive mineral addition + inorganic aerogel);
b. 40 - 90 parts by weight of cement-based hydraulic mineral binder, preferably Portland cement.

Preferably, when present, the at least one non-cementitious hydraulic binder is in an amount within the range of 1.0 to 30 wt%, with respect to the total weight of the mineral mixture (i.e., reactive mineral addition + inorganic aerogel).

Preferably, when present in the slurry, the additives are in an amount up to 25 wt%, more preferably from 0.5 to 20 wt%, with respect to the total weight of the reactive mineral addition and inorganic aerogel.

In a preferred embodiment of the present invention, a mineral mixture is prepared that contains all the solid ingredients of the formulation except for the cement-based hydraulic mineral binder. In this case, the cement-based hydraulic mineral binder is added to the above-mentioned mineral mixture when preparing the slurry. The arrangement of a powdered mineral mixture without the cement-based hydraulic mineral binder has the advantage of allowing the packaging and distribution of a lighter and less bulky ready-to-use product, thereby reducing the environmental impact of the product. Thereby, indeed, the environmental impact generated by transporting the cement-based hydraulic mineral binder to the site of use of the mineral foam is eliminated, the cement-based mineral binders (e.g., Portland cement) being ingredients that are readily available anywhere.

The slurry is prepared by mixing the cement-based hydraulic mineral binder, the mineral mixture with water (slurry water) at room temperature. The slurry water is added in an amount sufficient to fully hydrate the cement-based hydraulic mineral binder and the reactive mineral additions. Preferably, the slurry water is added in an amount within the range 25-60%, more preferably within the range 30-40%, with respect to the total weight of the cement-based hydraulic mineral binder and the reactive mineral additions.

Preferably, any additives that are in a liquid form under the use conditions are also added to the slurry water.

The slurry water can be at room temperature or at a temperature within the range 20-30°C.

The slurry thus obtained is then mixed with the pre-formed foam. The pre-formed foam is prepared separately, for example by mixing water and at least one foaming agent and incorporating air or another gas suitable for the purpose in the mixture.

The foaming agent can comprise, for example, a surfactant selected from: sodium lauryl sulphate, sodium laureth sulphate, sodium succinate, dodecylbenzenesulfonic acid, or hydrolysed protein and related mixtures thereof.

Preferably, said foaming agents are employed at concentrations from 1 to 7 wt%, more preferably from 2 to 6 wt%, with respect to the weight of the water used to form the pre-formed foam.

Preferably, the pre-formed foam has a bulk density within the range 30 - 100 g/L, preferably within the range 40 - 90 g/L.

In one embodiment, the pre-formed foam can be heated to 40°C to prevent the expansion of air following the combination of the foam with the slurry, which could affect the stability of the cellular structure of the mineral foam.

Preferably, the pre-formed foam is mixed with the slurry in a pre-formed foam : slurry weight ratio within the range of 1:50 to 1:120, preferably within the range of 1:80 to 1:90.

The preparation of the slurry, the pre-formed foam, and their mixing to form the mineral foam can be prepared with conventional devices and equipment well known to those skilled in the art.

The mineral foam can be poured in a containment cavity and hardened to obtain the cellular mineral material. The containment cavity can be, for example, a cavity suitably prepared in the wall to be made, or a mould (caisson) to form a building construction element.

The hardening can be obtained at room temperature or at a higher temperature, for example up to 45°C.

The hardening step preferably lasts from 24 hours to 92 hours, more preferably from 48 hours to 72 hours. Depending on the requirements, hardening can be followed by a step of drying the cellular material.

The cellular mineral material can have the desired shape, for example a plate or brick.

Preferably, the cellular mineral material has a density lower than 500 kg/m³, more preferably lower than 250 kg/m³. In a preferred embodiment, the density is within the range 50-200 kg/m³, still more preferably within the range 60-160 kg/m³.

The cellular mineral material has a thermal conductivity (measured according to DIN EN 12667 standard) less than 0.050 W/m·K, more preferably within the range 0.020 - 0.040 W/m·K.

The cellular mineral material has a compressive strength (measured according to DIN EN 826 standard) within the range 0.050 - 0.400 kPa, more preferably within the range 0.050 - 0.300 kPa.

The cellular mineral material according to the present invention can be used for various applications. In particular, it finds application in the construction field as a building construction element, thermal insulating element, sound absorbing element, or fire protection element.

The following example is provided solely for the purpose of illustrating the present invention and should not be considered as a limitation of the scope of protection defined by the attached claims.

### Example 1

A mineral foam was prepared according to the present invention from a mineral mixture and additives having the composition reported in Table 1.

**Table 1 - Mineral mixture with additives**

| Component | % w/w |
|---|---|
| Metakaolin | 93.5 |
| Silica aerogel | 1.5 |
| Iron oxide | 1 |
| Fluidifying additive | 4 |
| Total | 100 |

100 kg of the mixture of Table 1 were added to 65 kg of Portland cement 52.5 (N). The mixture thus obtained was then slurred with 35 liters of water and a super-plasticizing additive (in a concentration equal to 4 kg/m³ of water).

A pre-formed foam with a density of about 55 kg/L was prepared by mixing water and a foaming agent (lauryl sulphate) and insufflating air through a compressor.

The pre-formed foam and the slurry were mixed in a weight ratio of 1:90 by means of an automatic mixing plant, thereby forming a fluid mineral foam, which was cast in a mould.

The mineral foam was left to harden for 72 hours, at the end of which a cellular mineral material was obtained, having the following features:
- density equal to 120 kg/m³;
- thermal conductivity (DIN EN 12667) equal to 0.30 W/m.K;
- compressive strength (DIN EN 826) equal to 0.130 kPa.

The example shows that the present invention allows to obtain a cellular material which has excellent mechanical, thermal insulation, and low density properties in a simple manner and using a formulation with a reduced number of ingredients compared to the cellular mineral materials of the prior art.

## Claims

1. Method for preparing a mineral foam comprising the following steps in sequence:
a. preparing a slurry comprising:
(i) a mineral fraction comprising:
- at least one cement-based hydraulic mineral binder;
- at least one reactive mineral addition;
- at least one inorganic aerogel;
(ii) water;
(iii) optionally, at least one additive;
b. adding the slurry with a pre-formed foam to obtain the mineral foam.

2. Method according to claim 1, wherein said inorganic aerogel comprises at least one silica aerogel.

3. Method according to claim 1 or 2, wherein said cement-based hydraulic mineral binder is selected from: Portland cement, aluminous cement, amorphous aluminous cement, sulfo-aluminous cement and mixtures thereof.

4. Method according to claim 3, wherein said cement-based hydraulic mineral binder comprises at least Portland cement.

5. Method according to any one of the preceding claims 1 to 4, wherein said reactive mineral addition is selected from: calcined clay, fly ashes, silica fume, natural pozzolan, blast furnace slag, and mixtures thereof.

6. Method according to claim 5, wherein said reactive mineral addition comprises at least calcined clay, preferably at least metakaolin.

7. Method according to any one of the preceding claims 1 to 6, wherein said slurry comprises:
a. 100 parts by weight of a mineral mixture comprising:
- 95 - 99.3 wt% of at least one reactive mineral addition, preferably metakaolin,
- 0.7 - 5 wt% of an inorganic aerogel, preferably a silica aerogel,
said percentages being referred to the weight of the mineral mixture;
b. 40 - 90 parts by weight of at least one cement-based hydraulic mineral binder, preferably Portland cement.

8. Mineral foam comprising:
- at least one cement-based hydraulic mineral binder;
- at least one reactive mineral addition;
- at least one inorganic aerogel;
- optionally, at least one additive.

9. Cellular mineral material obtained by hardening the mineral foam according to claim 8.

10. Cellular mineral material according to claim 9 having one or more of the following features:
- bulk density within the range: 60 - 500 kg/m³, preferably 60 - 250 kg/m³, more preferably 60 - 200 kg/m³;
- thermal conductivity (DIN EN 12667) within the range 0.020-0.050 W/m.K;
- compressive strength (DIN EN 826) within the range 0.050 - 0.400 kPa; preferably 0.050 - 0.300 kPa.

11. Building construction element comprising the cellular mineral material according to claim 9 or 10.

12. Use of the cellular mineral material according to claim 9 or 10 as a thermal insulating material, sound absorbing material or building construction material.
